# EUROPEAN PATENT APPLICATION

(11) **EP 4 321 282 A1**
(43) Date of publication of application: **14.02.2024**
(21) Application number: 23186312.7
(22) Date of filing: 19.07.2023
(51) Int. Cl.: B22F 10/28, B22F 12/00, B22F 12/90, B33Y 30/00, G21F 7/00

(54) **THREE-DIMENSIONAL POWDER BED FUSION ADDITIVE MANUFACTURING APPARATUS**

(30) Priority: 09.08.2022 JP 2022126993
(71) Applicant: Jeol Ltd., Akishima-shi, Tokyo 196-8558 (JP)
(72) Inventor: TSUDA, Takashi, Tokyo, 196-8558 (JP)
(74) Representative: Boult Wade Tennant LLP

(57) **Abstract**

There is provided a three-dimensional powder bed fusion additive manufacturing apparatus (10, 10A, 10B, 10C) capable of more effectively using thermal energy input to a build plate or a powder layer by irradiation with an electron beam than that in the related art.

A three-dimensional powder bed fusion additive manufacturing (PBF-AM) apparatus (10, 10A, 10B, 10C) includes: a build plate (22) that holds a powder layer (32a) made of a metal powder (32); a beam irradiating device (14) that irradiates the build plate (22) or the powder layer (32a) with an electron beam (15); and a heat shield unit (28) shields radiant heat emitted from a part heated by irradiation with the electron beam (15). The heat shield unit is configured of a plurality of heat shield members. Each of the plurality of heat shield members has a side wall surrounding a side of a beam passage region through which the electron beam passes, and the side walls are arranged to overlap each other on a side of the beam passage region.

## Description

### BACKGROUND

### Technical Field

The present invention relates to a three-dimensional powder bed fusion additive manufacturing apparatus.

### Related Art

In recent years, a three-dimensional powder bed fusion additive manufacturing (PBF-AM) apparatus that irradiates a powder material (powder layer) spread in a layer shape on a build plate with an electron beam to melt and solidify the powder material and sequentially stacks solidified layers by moving the build plate to form a three-dimensionally built object has been introduced. This type of three-dimensional PBF-AM apparatus is described in Patent Literature 1, for example. Patent Literature 1 describes that a shield member provided in a vacuum chamber suppresses a decrease in temperature of a build plate.

### Citation List

### Patent Literature

Patent Literature 1: JP 2020-33580 A

### SUMMARY

However, in the three-dimensional PBF-AM apparatus described in Patent Literature 1, it is not possible to ascertain that the thermal energy input to the build plate or the powder layer by irradiation with the electron beam is always sufficiently and effectively used.

The present invention has been made to solve the above problems, and an object thereof is to provide a three-dimensional PBF-AM apparatus capable of more effectively using thermal energy input to a build plate or a powder layer by irradiation with an electron beam than that in the related art.

A three-dimensional PBF-AM apparatus according to the present invention includes: a build plate that holds a powder layer made of a metal powder; a beam irradiating device that irradiates the build plate or the powder layer with an electron beam; and a heat shield unit that is disposed between the build plate and the beam irradiating device and shields radiant heat emitted from a part heated by irradiation with the electron beam. The heat shield unit is configured of a plurality of heat shield members. Each of the plurality of heat shield members has a side wall surrounding a side of a beam passage region through which the electron beam passes, and the side walls are arranged to overlap each other on a side of the beam passage region.

According to the present invention, thermal energy input to the build plate or the powder layer by the irradiation with the electron beam can be more effectively used than that in the related art.

### BRIEF DESCRIPTION OF DRAWINGS

FIG. 1 is a side view schematically illustrating a configuration of a three-dimensional PBF-AM apparatus according to a first embodiment of the present invention;
FIG. 2 is a perspective view illustrating a configuration of a pyramidal heat shield member;
FIG. 3 is a perspective view illustrating a conical heat shield member;
FIG. 4 is a view (part 1) for explaining a principle in which the pyramidal heat shield member is deformed due to thermal expansion;
FIG. 5 is a view (part 2) for explaining the principle in which the pyramidal heat shield member is deformed due to the thermal expansion;
FIG. 6 is a view for explaining an arrangement state of a build plate having a circular shape in a plan view and a conical heat shield member;
FIG. 7 is a view for explaining an arrangement state of the build plate having a circular shape in a plan view and the pyramidal heat shield member;
FIG. 8 is a side view schematically illustrating a configuration of a three-dimensional PBF-AM apparatus according to a second embodiment of the present invention;
FIG. 9 is a side cross-sectional view illustrating an arrangement state of conical heat shield members in the second embodiment;
FIG. 10 is a side view schematically illustrating a configuration of a three-dimensional PBF-AM apparatus according to a third embodiment of the present invention; and
FIG. 11 is a side view schematically illustrating a configuration of a three-dimensional PBF-AM apparatus according to a fourth embodiment of the present invention.

### DETAILED DESCRIPTION

Hereinafter, an embodiment of the present invention will be described in detail with reference to the drawings. In this specification and the drawings, elements having substantially the same function or configuration are denoted by the same reference numerals, and redundant description thereof is omitted.

### <First Embodiment>

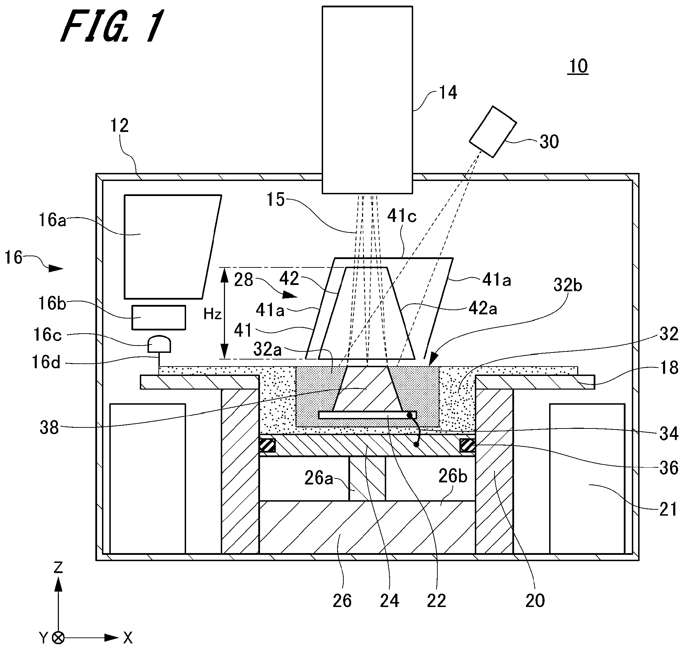

FIG. 1 is a side view schematically illustrating a configuration of a three-dimensional PBF-AM apparatus according to a first embodiment of the present invention. In the following description, in order to clarify a shape, a positional relationship, and the like of each part of the three-dimensional PBF-AM apparatus, a horizontal direction in FIG. 1 is referred to as an X direction, a depth direction in FIG. 1 is referred to as a Y direction, and a vertical direction in FIG. 1 is referred to as a Z direction. The X direction, the Y direction, and the Z direction are directions orthogonal to each other. In addition, the X direction and the Y direction are parallel to the horizontal direction, and the Z direction is parallel to the vertical direction.

As illustrated in FIG. 1, a three-dimensional PBF-AM apparatus 10 includes a vacuum chamber 12, a beam irradiating device 14, a powder applying device 16, a build table 18, a build box 20, a collection box 21, a build plate 22, an inner base 24, a plate moving device 26, a heat shield unit 28, and a camera 30.

The vacuum chamber 12 is a chamber for setting a vacuum state by evacuating air in the chamber by a vacuum pump (not illustrated).

The beam irradiating device 14 is a device that irradiates the build plate 22 or a powder layer 32a with an electron beam 15. The powder layer 32a is a layer formed of a metal powder 32 on the build plate 22. As the metal powder 32, for example, a low melting point metal such as copper, a titanium (Ti)-aluminum (Al) alloy, a high melting point metal such as an iron-based metal, or a metal such as 64Ti having a melting point in an intermediate range between the low melting point metal and the high melting point metal is used. Although not illustrated, the beam irradiating device 14 includes an electron gun that is a generation source of the electron beam 15, a focusing lens that focuses the electron beam generated by the electron gun, and a deflection lens that deflects the electron beam 15 focused by the focusing lens. The focusing lens is configured using, for example, a focusing coil and focuses the electron beam 15 with a magnetic field generated by the focusing coil. The deflection lens is configured using, for example, a deflection coil and deflects the electron beam 15 with a magnetic field generated by the deflection coil.

The powder applying device 16 is a device that applies the metal powder 32, which is a raw material of a built object 38, to form the powder layer 32a on the build plate 22. The powder applying device 16 includes a hopper 16a, a powder dropping unit 16b, and a squeegee 16c. The hopper 16a is a container for storing the metal powder 32. The powder dropping unit 16b is a machine that drops the metal powder 32 stored in the hopper 16a onto the build table 18. The squeegee 16c is an elongated member that extends in the Y direction and includes a blade 16d for spreading the powder. The squeegee 16c spreads the metal powder 32 dropped by the powder dropping unit 16b on the build table 18. The squeegee 16c is provided to be movable in the X direction in order to spread the metal powder 32 over an entire surface of the build table 18.

The build table 18 is horizontally disposed inside the vacuum chamber 12. A central portion of the build table 18 is open. An opening shape of the build table 18 is circular in a plan view or square in a plan view (for example, quadrangular in a plan view). In this embodiment, as a preferable example, the opening shape of the build table 18 is circular in a plan view.

The build box 20 is a box that forms a build space. An upper end portion of the build box 20 is connected to an opening edge of the build table 18. A lower end portion of the build box 20 is connected to a bottom wall of the vacuum chamber 12.

The collection box 21 is a box that collects the metal powder 32 supplied more than necessary, of the metal powder 32 supplied onto the build table 18 by the powder applying device 16.

The build plate 22 is a plate that holds the powder layer 32a made of the metal powder 32. The built object 38 is formed by being laminated on the build plate 22. The build plate 22 is formed in a circular shape in a plan view or a square shape in a plan view (for example, quadrangular shape in a plan view) to match the opening shape of the build table 18. In this embodiment, as a preferable example, the build plate 22 is formed in a circular shape in a plan view. The build plate 22 is connected (grounded) to the inner base 24 by a ground wire 34 not to come into an electrically floating state. The inner base 24 is maintained at a ground (GND) potential. The metal powder 32 is spread over the build plate 22 and the inner base 24.

The inner base 24 is provided to be movable in the vertical direction (Z direction). The build plate 22 moves in the vertical direction integrally with the inner base 24. The inner base 24 has a larger outer size than the build plate 22. The inner base 24 slides in the vertical direction along an inner surface of the build box 20. A seal member 36 is mounted on an outer circumferential portion of the inner base 24. The seal member 36 is a member that maintains slidability and sealability between the outer circumferential portion of the inner base 24 and the inner surface of the build box 20. The seal member 36 is made of a material having heat resistance and elasticity.

The plate moving device 26 is a device that moves the build plate 22 and the inner base 24 in the vertical direction. The plate moving device 26 includes a shaft 26a and a drive mechanism unit 26b. The shaft 26a is connected to an undersurface of the inner base 24. The drive mechanism unit 26b includes a motor and a power transmission mechanism (both not illustrated) and drives the power transmission mechanism using the motor as a drive source, thereby, moving the build plate 22 and the inner base 24 integrally with the shaft 26a in the vertical direction. The power transmission mechanism is configured to include, for example, a rack and pinion mechanism, a ball screw mechanism, and the like.

The heat shield unit 28 is disposed between the build plate 22 and the beam irradiating device 14 in the Z direction. The heat shield unit 28 is a unit that shields radiant heat emitted from a part heated by irradiation with the electron beam 15 when the build plate 22 or the powder layer 32a is irradiated with the electron beam 15 by the beam irradiating device 14, thereby, suppressing a decrease in temperature of the build plate 22 or the powder layer 32a. A configuration of the heat shield unit 28 will be described in detail below.

The camera 30 is a camera capable of imaging the build surface 32b of the powder layer 32a. The camera 30 is disposed in a tilted state with respect to the Z direction in order to obliquely image the build surface 32b of the powder layer 32a. The camera 30 generates an image (image data) of the powder layer 32a by imaging the build surface 32b of the powder layer 32a through a window (not illustrated) provided in the vacuum chamber 12. Therefore, the image generated by the camera 30 is an image indicating a state of the build surface 32b of the powder layer 32a.

Here, the configuration of the heat shield unit 28 is described in detail.

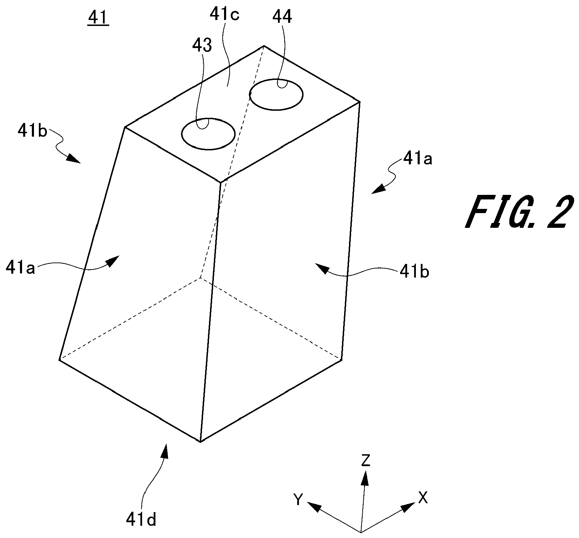

As illustrated in FIG. 1, the heat shield unit 28 is configured to include a pyramidal heat shield member 41 and a conical heat shield member 42. The heat shield member 42 is disposed inside the heat shield member 41. That is, the heat shield member 42 is disposed on the innermost side in the heat shield unit 28. The heat shield member 41 has side walls 41a and 41b (see FIG. 2) and an upper wall 41c. The side walls 41a and 41b are arranged to surround sides of the beam passage region through which the electron beam 15 passes. The upper wall 41c is disposed in a state of facing the build plate 22 in the Z direction.

The heat shield member 42 has a side wall 42a. The heat shield member 42 is disposed in a space surrounded by the side walls 41a and 41b and the upper wall 41c of the heat shield member 41. The side wall 42a is disposed to surround the side of the beam passage region through which the electron beam 15 passes. The heat shield member 41 and the heat shield member 42 are arranged in a state of forming a space between the side wall 42a and the side walls 41a and 41b (see FIG. 2) adjacent to each other on the side of the beam passage region.

In addition, the side walls 41a and 41b of the heat shield member 41 and the side wall 42a of the heat shield member 42 are arranged in a state of overlapping each other on the side of the beam passage region. In other words, the side wall 42a of the heat shield member 42 is disposed in a state of overlapping the side walls 41a and 41b of the heat shield member 41 when the heat shield unit 28 is viewed from the horizontal direction (for example, in the X direction,). A size Hz by which the side wall 42a and the side walls 41a and 41b overlap each other in the Z direction is preferably half or more of a height size of the heat shield member 42, more preferably 2/3 or more of the height size of the heat shield member 42, and still more preferably substantially the same as the height size of the heat shield member 42 as illustrated in FIG. 1. The height size of the heat shield member 42 is a size defined in the Z direction.

In this specification, the pyramid shape refers to a three-dimensional shape in which a horizontal cross-sectional shape is a polygon, and a horizontal cross-sectional area of an internal space surrounded by the side walls 41a and 41b gradually increases from the beam irradiating device 14 side toward the build plate 22 side. In addition, in this specification, the conical shape refers to a three-dimensional shape in which a horizontal cross-sectional shape is circular, and a horizontal cross-sectional area of an internal space surrounded by the side wall 42a gradually increases from the beam irradiating device 14 side toward the build plate 22 side.

FIG. 2 is a perspective view illustrating the pyramidal heat shield member.

As illustrated in FIG. 2, the heat shield member 41 is formed in a quadrangular pyramid shape, that is, a foursided pyramid shape, in a horizontal cross-sectional shape. The heat shield member 41 has a total of four side walls 41a and 41b and one upper wall 41c. A quadrangular opening 41d is formed at a bottom portion of the heat shield member 41. The opening 41d corresponds to an opening formed in the heat shield member 41 on the build plate 22 side. The side walls 41a and 41b and the upper wall 41c are each made of a metal (for example, stainless steel or the like) plate.

The two side walls 41a are disposed to face each other in the X direction. One side wall 41a is disposed in a state of being inclined in the same direction as the side wall 42a of the heat shield member 42, and the other side wall 41a is disposed in a state of being inclined in a direction opposite to the side wall 42a of the heat shield member 42 (see FIG. 1). The two side walls 41b are disposed to face each other in the Y direction. Each side wall 41b is disposed in a state of being inclined in the same direction as the side wall 42a of the heat shield member 42. In addition, the side wall 41a is formed in a trapezoidal shape when viewed in the X direction. A length of an upper side of the side wall 41a is shorter than a length of a lower side of the side wall 41a. The side wall 41b is formed in a parallelogram shape when viewed in the Y direction.

The upper wall 41c is formed in a rectangular shape when viewed in the Z direction. A beam passing hole 43 and a camera imaging hole 44 are formed in the upper wall 41c. The beam passing hole 43 and the camera imaging hole 44 are formed at positions which are shifted from each other in the X direction. The beam passing hole 43 is a hole for allowing the electron beam 15 to pass therethrough. The beam passing hole 43 corresponds to an opening formed in the heat shield member 41 on the beam irradiating device 14 side. The beam passing hole 43 is formed to have an opening size smaller than that of the opening 41d. In addition, the beam passing hole 43 is formed in a circular shape when viewed in the Z direction. The camera imaging hole 44 is a hole for securing a field of view of the camera 30. The camera imaging hole 44 is formed in a circular shape when viewed in the Z direction.

A total opening area of the beam passing hole 43 and the camera imaging hole 44 is smaller than the opening area of the opening 41d. That is, the opening area of the upper portion of the heat shield member 41 is smaller than the opening area of the bottom portion of the heat shield member 41. Consequently, leakage of heat confined in the internal space of the heat shield member 41 can be suppressed. In addition, in a case where the heat shield member 41 has the upper wall 41c, the heat confinement effect can be enhanced as compared with a case where the heat shield member 41 does not have the upper wall 41c.

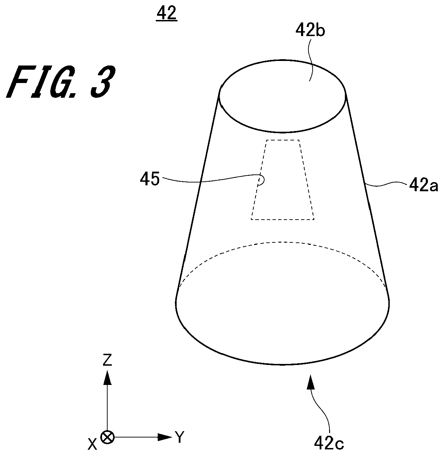

FIG. 3 is a perspective view illustrating a conical heat shield member.

As illustrated in FIG. 3, the heat shield member 42 has a flared side wall 42a. A circular opening 42b is formed in an upper portion of the heat shield member 42, and a circular opening 42c is also formed at a bottom portion of the heat shield member 42. The opening 42b corresponds to an opening formed in the heat shield member 42 on the beam irradiating device 14 side, and the opening 42c corresponds to an opening formed in the heat shield member 42 on the build plate 22 side. The opening 42b is formed to have an opening size smaller than that of the opening 42c. In addition, a diameter of the opening 42c is set to be substantially the same as a diameter of the build plate 22 or slightly larger than the diameter of the build plate 22. The side wall 42a is made of a metal (for example, stainless steel or the like) plate. A camera imaging hole 45 is formed in the side wall 42a. The camera imaging hole 45 is a hole for securing a field of view of the camera 30.

Subsequently, an operation of the three-dimensional PBF-AM apparatus 10 according to the first embodiment of the present invention will be described.

First, in a state before a building operation is started, three sides of the build plate 22 are covered with the metal powder 32 except for the upper surface of the build plate 22. In addition, the upper surface of the build plate 22 is disposed at substantially the same height as the upper surface of the metal powder 32 spread on the build table 18. The building operation is started in this state.

First, the beam irradiating device 14 irradiates the build plate 22 with the electron beam 15, thereby, preheating the build plate 22.

Next, the plate moving device 26 lowers the inner base 24 by a predetermined length so that the upper surface of the build plate 22 is slightly lower than the upper surface of the metal powder 32 spread on the build table 18. At this time, the build plate 22 is lowered by a predetermined length together with the inner base 24. The predetermined length (hereinafter, also referred to as "ΔZ") described here corresponds to a thickness of one layer when the built object 38 is formed by laminating layers one by one.

Next, the powder applying device 16 applies the metal powder 32 to form a first powder layer 32a on the build plate 22. Specifically, the powder applying device 16 drops the metal powder 32 supplied from the hopper 16a to the powder dropping unit 16b onto the build table 18 by the powder dropping unit 16b and then moves the squeegee 16c in the X direction, thereby, spreading the metal powder 32 on the build plate 22. At this time, the metal powder 32 is spread on the build plate 22 to have a thickness equivalent to ΔZ. Consequently, the powder layer 32a is formed on the build plate 22. In addition, the redundant metal powder 32 is collected in the collection box 21.

Next, the beam irradiating device 14 irradiates the powder layer 32a on the build plate 22 with the electron beam 15, thereby, temporary-sintering the metal powder 32. Consequently, the metal powder 32 for forming a first powder layer 32a is temporarily sintered.

Next, the beam irradiating device 14 irradiates the powder layer 32a on the metal powder 32 with the electron beam 15, thereby, main-sintering the metal powder 32. Specifically, the beam irradiating device 14 designates a build region based on two-dimensional data obtained by slicing three-dimensional CAD data of a target built object 38 by a constant thickness (thickness equivalent to ΔZ) and scans the build region with the electron beam 15, thereby, main-sintering the metal powder 32 on the build plate 22. Consequently, a first layer of the built object is formed.

Next, the plate moving device 26 lowers the build plate 22 and the inner base 24 by ΔZ.

Subsequently, the beam irradiating device 14 irradiates the powder layer 32a on the build plate 22 with the electron beam 15 to preheat the powder layer 32a. The preheating of the powder layer 32a is performed as preparation for spreading the metal powder 32 of the next layer.

Next, the powder applying device 16 applies the metal powder 32 to form a second powder layer 32a on the build plate 22.

Next, the beam irradiating device 14 irradiates the powder layer 32a on the build plate 22 with the electron beam 15, thereby, temporary-sintering the metal powder 32. Consequently, the metal powder 32 for forming a second powder layer 32a is calcined.

A main reason for temporary-sintering the metal powder 32 is as follows. In the three-dimensional PBF-AM apparatus, the individual metal powders 32 are charged by the irradiation with the electron beam 15, and a phenomenon in which the powders are scattered in a smoke form by Coulomb repulsion may occur. The phenomenon is called smoke, and when smoke occurs, it becomes difficult to continue the build work. Therefore, in the three-dimensional PBF-AM apparatus, before the metal powder 32 is main-sintered by melting and solidification, the metal powder 32 is temporary-sintered by preheating. In this manner, the occurrence of smoke is suppressed.

Next, the beam irradiating device 14 irradiates the powder layer 32a on the metal powder 32 with the electron beam 15, thereby, main-sintering the metal powder 32. Consequently, a second layer of the built object is formed.

Thereafter, the lowering of the build plate 22, the preheating of the powder layer 32a, the application of the metal powder 32, the temporary-sintering of the metal powder 32, and the main-sintering of the metal powder 32 described above are repeated for each of the third and subsequent layers. Consequently, the three-dimensional built object 38 is obtained. However, at a stage of finishing the building operation, a fragile portion called a temporary-sintered body is attached to the built object 38 which is a portion where complete metal bonding has been performed. Therefore, it is necessary to remove the temporary-sintered body from the built object 38 after the building operation is ended. The temporary-sintered body is removed by blasting or the like.

In the operation of the three-dimensional PBF-AM apparatus 10 described above, when the beam irradiating device 14 irradiates the build plate 22 or the powder layer 32a with the electron beam 15, the conical heat shield member 42 is disposed in proximity to the upper surface of the build plate 22 or the build surface 32b of the powder layer 32a.

In this embodiment, the build plate 22 is formed in a circular shape in a plan view, and the heat shield member 42 is formed in a conical shape. Therefore, when the build plate 22 is preheated by irradiation with the electron beam 15, an opening edge of the bottom portion of the heat shield member 42 can be disposed along an outer circumferential edge of the build plate 22. Consequently, the radiant heat can be trapped in the internal space of the heat shield member 42 without a leakage of the radiant heat emitted from the build plate 22 to the outside of the heat shield member 42 as much as possible. In addition, the effect of trapping the radiant heat can also be obtained when the powder layer 32a on the build plate 22 is preheated by irradiation with the electron beam 15, or when the metal powder 32 is sintered (temporary-sintered or main-sintered) by irradiation with the electron beam 15.

In addition, in this embodiment, the heat shield unit 28 is configured of the plurality of heat shield members 41 and 42. In addition, the side walls 41a and 41b of the heat shield member 41 and the side wall 42a of the heat shield member 42 are arranged in a state of overlapping each other on the side of the beam passage region. Consequently, the radiant heat emitted from the build plate 22 and the powder layer 32a can be effectively used as compared with the case where the heat shield unit 28 is configured of one heat shield member (for example, only the heat shield member 42). The reason will be described below.

First, when the build plate 22 or the powder layer 32a is irradiated with the electron beam 15, radiant heat is emitted from a part heated by the irradiation with the electron beam 15. Specifically, when the build plate 22 is irradiated with the electron beam 15, radiant heat is emitted from the upper surface of the build plate 22, and when the powder layer 32a is irradiated with the electron beam 15, radiant heat is emitted from the build surface 32b of the powder layer 32a. The emitted radiant heat is reflected or diffused by the side wall 42a of the heat shield member 42 and returns to the build plate 22 side. In addition, a part of the emitted radiant heat is absorbed by the side wall 42a of the heat shield member 42 and is emitted to the outside of the heat shield member 42.

In this embodiment, the heat shield member 41 is disposed outside the heat shield member 42. Therefore, the radiant heat emitted to the outside of the heat shield member 42 is reflected or diffused by the side walls 41a and 41b of the heat shield member 41 and returns to the heat shield member 42 side. Consequently, the radiant heat can be trapped in the space between the heat shield member 41 and the heat shield member 42. In addition, a part of the trapped radiant heat can return to the build plate 22 side through the side wall 42a of the heat shield member 42. Hence, the radiant heat emitted from the build plate 22 and the powder layer 32a can be effectively used as compared with the case where the heat shield unit 28 is configured of one heat shield member (for example, only the heat shield member 42). As a result, thermal energy input to the build plate 22 or the powder layer 32a by the irradiation with the electron beam 15 can be more effectively used than that in the related art.

In addition, according to this embodiment, a process time taken for temporary-sintering the metal powder 32 can be significantly shortened. The reason is as follows.

In a process of temporary-sintering the metal powder 32 (hereinafter, also referred to as a "temporary-sintering process"), when the powder layer 32a is irradiated with the electron beam 15 having a high energy density in order to shorten the process time, smoke is likely to be produced. Therefore, it is necessary to irradiate the powder layer 32a with the electron beam 15 having a low energy density for a long time until the temporary sintering of the metal powder 32 is completed.

In this embodiment, a structure in which the radiant heat emitted from the build surface 32b of the powder layer 32a is shielded by the two heat shield members 41 and 42, that is, a double shield structure, is employed. Therefore, the radiant heat emitted from the build surface 32b can be trapped by the outer heat shield member 41 and the inner heat shield member 42. In particular, in a case where a space is formed between the side walls 41a and 41b of the heat shield member 41 and the side wall 42a of the heat shield member 42, the heat trap effect (heat insulation effect) is enhanced as compared with a case where the side walls are in close contact with each other.

In this embodiment, the temporary-sintering process can be performed while suppressing a temperature decrease of the build surface 32b by the above-described heat trap effect. Hence, a process time taken for temporary-sintering the metal powder 32 can be significantly reduced. In addition, the reduction of the process time is also realized in a process of preheating the build plate 22, a process of preheating the powder layer 32a, and a process of main-sintering the metal powder 32. As a result, the time from the start of the building operation to the end of the building operation can be significantly shortened.

In particular, when the built object 38 is formed using the metal powder 32 made of a high melting point metal, a process temperature required for temporary-sintering or main-sintering the metal powder 32 becomes high, and thus it is important not to release the radiant heat as much as possible in order to shorten the process time. In this respect, in the three-dimensional PBF-AM apparatus 10 according to this embodiment, since the radiant heat is trapped by the above-described double shield structure, the process time can be significantly shortened. In addition, according to this embodiment, the thermal energy required for forming the built object 38 can be significantly reduced, and the three-dimensional PBF-AM apparatus 10 having good energy saving performance can be provided.

In addition, in the temporary-sintering process, when a beam current of the electron beam 15 is increased in order to compensate for the amount of heat lost by the release of the radiant heat, the temperature of the metal powder 32 becomes too high, and the metal powder 32 may be sintered too much. In this case, it becomes difficult to remove the temporary-sintered body from the built object 38 by the blasting or the like. In this embodiment, since the above-described double shield structure is adopted, the amount of heat lost by the release of the radiant heat can be significantly reduced. Therefore, in the temporary-sintering process, the metal powder 32 can be temporary-sintered while an excessive temperature rise of the metal powder 32 is suppressed. Hence, the temporary-sintered body can be easily removed from the built object 38 in a step after the building operation is completed.

In addition, in this embodiment, the heat shield unit 28 has a configuration in which the pyramidal heat shield member 41 and the conical heat shield member 42 are combined. For example, as illustrated in FIG. 1, in a case where the build surface 32b of the powder layer 32a is imaged by the camera 30 in an oblique direction, the pyramidal heat shield member 41 is preferable in that the leakage of the radiant heat can be suppressed by the presence of the upper wall 41c in which the beam passing hole 43 and the camera imaging hole 44 are formed.

However, in a case where the heat shield unit 28 is configured of only the pyramidal heat shield member 41, the radiant heat emitted from the build plate 22 and the powder layer 32a is directly transmitted to the heat shield member 41, and thus the heat shield member 41 is likely to be significantly deformed. The reason will be described below.

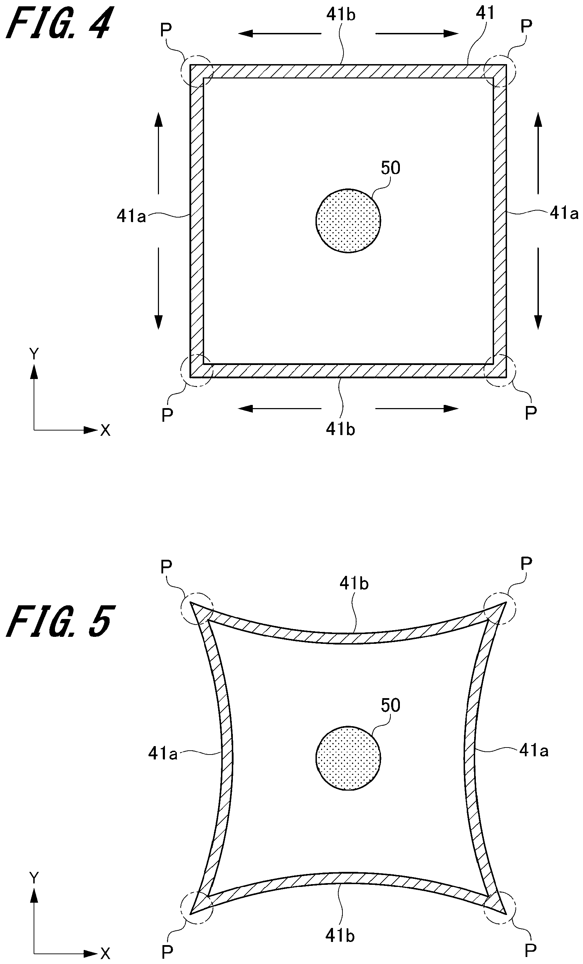

The heat shield member 41 is manufactured, for example, by joining a plurality of metal plates by welding. When the temperature of the heat shield member 41 rises due to the radiant heat, the plates (side walls 41a and 41b and upper wall 41c) constituting the heat shield member 41 are all thermally expanded. In this case, for example, as illustrated in FIG. 4, when a heat source 50 is assumed to be present in a central portion of the heat shield member 41, the side walls 41a and 41b tend to expand in an arrow direction due to thermal expansion. However, since an end portion of the side wall 41a and an end portion of the side wall 41b are joined to each other by welding, the positions of the four corners P of the side walls 41a and 41b having a quadrangular horizontal cross section are restricted. Hence, the side walls 41a and 41 are all suppressed from extending in the arrow direction. As a result, the side walls 41a and 41b are all significantly curved as illustrated in FIG. 5. In addition, since thermal stress concentrates on the four corners P of the side walls 41a and 41b, the welded portion may be damaged.

In this embodiment, the heat shield member 42 is disposed inside the heat shield member 41. Therefore, in the internal space of the heat shield member 41, the heat shield member 42 functions as a heat buffer member. Hence, deformation of the heat shield member 41 and breakage of the welded portion can be suppressed. In addition, even when the side wall 42a of the conical heat shield member 42 is thermally expanded due to the temperature rise of the heat shield member 42, only an outer diameter of the heat shield member 42 is increased without a change in shape of the heat shield member 42 itself. In addition, the conical heat shield member 42 has an advantage in that the conical heat shield member easily returns to the original shape as compared with the pyramidal heat shield member 41 in a case of thermal contraction due to a temperature decrease.

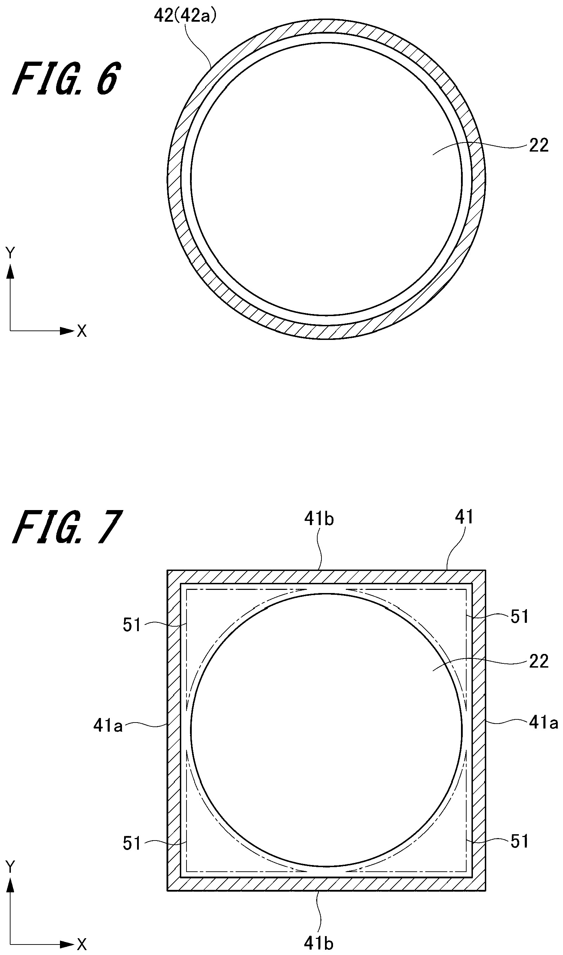

In addition, in this embodiment, the conical heat shield member 42 is disposed on the innermost side of the heat shield unit 28. Consequently, as illustrated in FIG. 6, the heat shield member 42 can be disposed near the build plate 22 having a circular shape in a plan view and the powder layer 32a (see FIG. 1) formed on the build plate 22 in a horizontal plane without generating a redundant space due to a difference in shape. Therefore, the heat shield member 42 enables the radiant heat emitted from the build plate 22 and the powder layer 32a to efficiently return to the build plate 22 side. In addition, in the conical heat shield member 42, when the upper surface of the build plate 22 having a circular shape in a plan view or the build surface 32b of the powder layer 32a is scanned with the electron beam 15, the electron beam 15 passes near the side wall 42a in parallel with the side wall 42a more frequently than in the pyramidal heat shield member 41. Therefore, the side wall 42a of the heat shield member 42 is disposed near the build plate 22 and the powder layer 32a, which are the radiant heat emitting sources, and the side wall 42a enables the radiant heat to return to the build plate 22 side. Hence, the utilization efficiency of the radiant heat is increased.

Incidentally, in a case where the pyramidal heat shield member 41 is disposed on the innermost side of the heat shield unit 28, as illustrated in FIG. 7, a redundant space 51 is formed around the build plate 22 due to a difference in shape between the build plate 22 having a circular shape in a plan view and the heat shield member 41 having a quadrangular shape in a plan view. In addition, at the four corners of the heat shield member 41, the side walls 41a and 41b are disposed away from the radiant heat emission source by the space 51. Hence, the utilization efficiency of the radiant heat is lowered.

### <Second Embodiment>

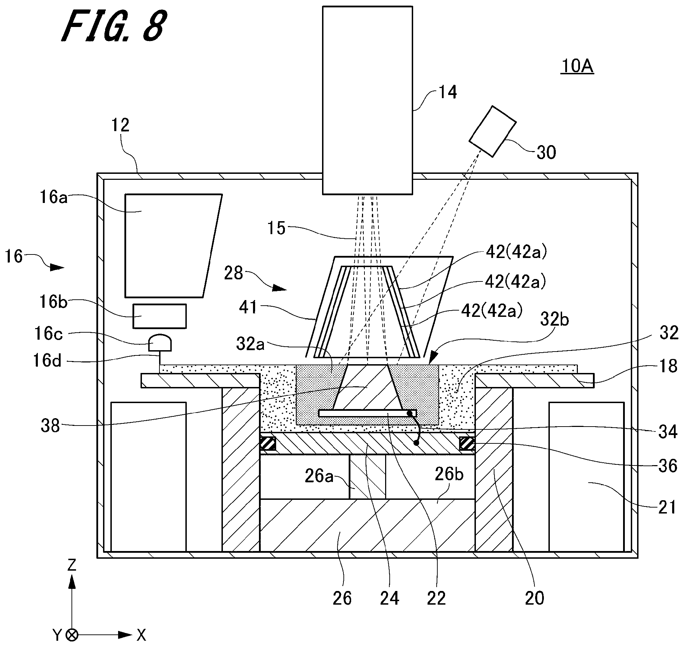

FIG. 8 is a side view schematically illustrating a configuration of a three-dimensional PBF-AM apparatus according to a second embodiment of the present invention.

As illustrated in FIG. 8, a three-dimensional PBF-AM apparatus 10A according to the second embodiment differs from the case of the above-described first embodiment (FIG. 1) in the configuration of the heat shield unit 28. Specifically, the three-dimensional PBF-AM apparatus 10A is different in that, of pyramidal heat shield member 41 and the conical heat shield member 42 constituting the heat shield unit 28, a plurality of conical heat shield members 42 are disposed. In the second embodiment, as an example, three heat shield members 42 are disposed. In this case, the total number of the heat shield members 41 and 42 constituting the heat shield unit 28 is four. That is, the heat shield unit 28 has a quadruple shield structure. The double or more shield structure can be rephrased as a multiple shield structure.

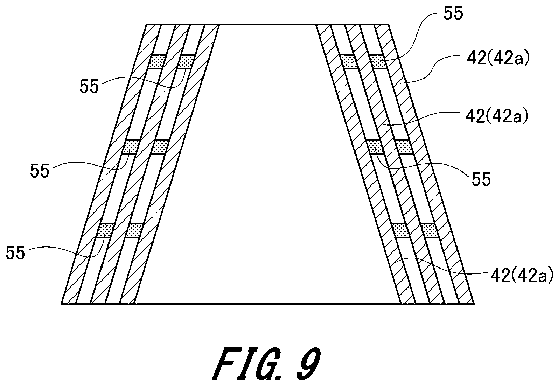

Each of the three heat shield members 42 has a side wall 42a. The heat shield members 42 are all disposed in a state of forming a space between the side walls 42a adjacent to each other on the side of the beam passage region. For example, as illustrated in FIG. 9, this space is formed by disposing a spacer 55 between the inner heat shield member 42 (side wall 42a) and the outer heat shield member 42 (side wall 42a). As the spacer 55, for example, a metal mesh sheet can be used. However, a configuration for forming the space between the side walls 42a is not limited to the case of using the spacer 55, and for example, a configuration in which the side wall 42a is formed in a wave shape is also conceivable.

As described above, when a plurality of conical heat shield members 42 are arranged inside the pyramidal heat shield member 41, the plurality of heat shield members 42 inside the heat shield member 41 enable the radiant heat emitted from the build plate 22 and the powder layer 32a to return to the build plate 22 side. In addition, a space formed between the side walls 42a of the heat shield members 42 is narrower than a space formed between the side walls 41a and 41b of the heat shield member 41 and the side wall 42a of the heat shield member 42. In addition, the three heat shield members 42 shield the radiant heat at positions closer to the build plate 22 than the position of the heat shield members 41. Therefore, the plurality of heat shield members 42 enable the radiant heat emitted from the build plate 22 and the like to efficiently return to the build plate 22 side. In addition, the amount of radiant heat leaking into the space between the heat shield member 41 and the heat shield member 42 can be reduced, and the heat shield member 41 enables the leaked radiant heat to return to the build plate 22 side.

### <Third Embodiment>

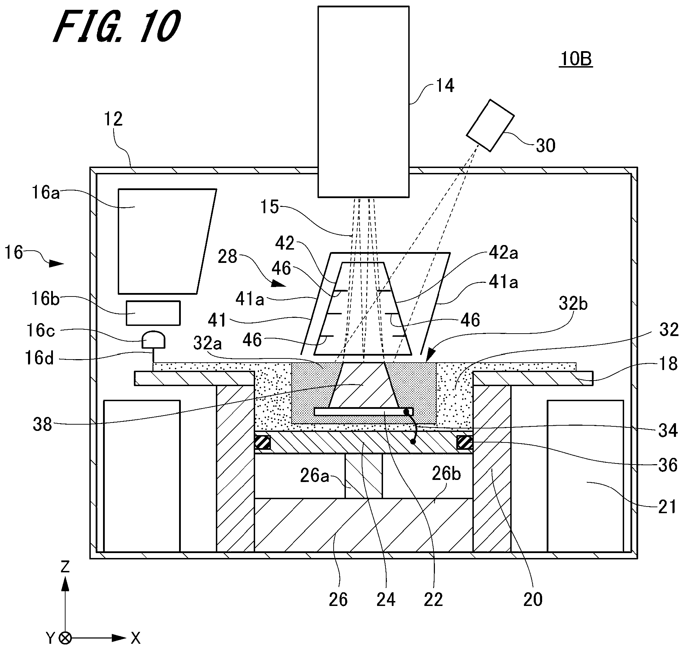

FIG. 10 is a side view schematically illustrating a configuration of a three-dimensional PBF-AM apparatus according to a third embodiment of the present invention.

As illustrated in FIG. 10, a three-dimensional PBF-AM apparatus 10B according to the third embodiment differs from the above-described first embodiment (FIG. 1) in the configuration of the heat shield member 42. Specifically, a trap portion 46 is formed inside the side wall 42a of the heat shield member 42. The trap portion 46 is a portion that traps and reflects radiant heat emitted from the build plate 22 and the powder layer 32a. The trap portion 46 is formed in a fin shape in a state of projecting in the horizontal direction from the inner surface of the side wall 42a. In addition, a plurality of trap portions 46 are arranged at a plurality of heights (three heights in the example of FIG. 10) in the Z direction.

By forming the trap portions 46 in the heat shield member 42 in this manner, the radiant heat emitted from the build plate 22 and the powder layer 32a is trapped by the trap portion 46, and the trapped radiant heat is reflected by the trap portions 46 toward the build plate 22. Therefore, the amount of radiant heat returning to the build plate 22 side by the heat shield member 42 can be increased.

### <Fourth Embodiment>

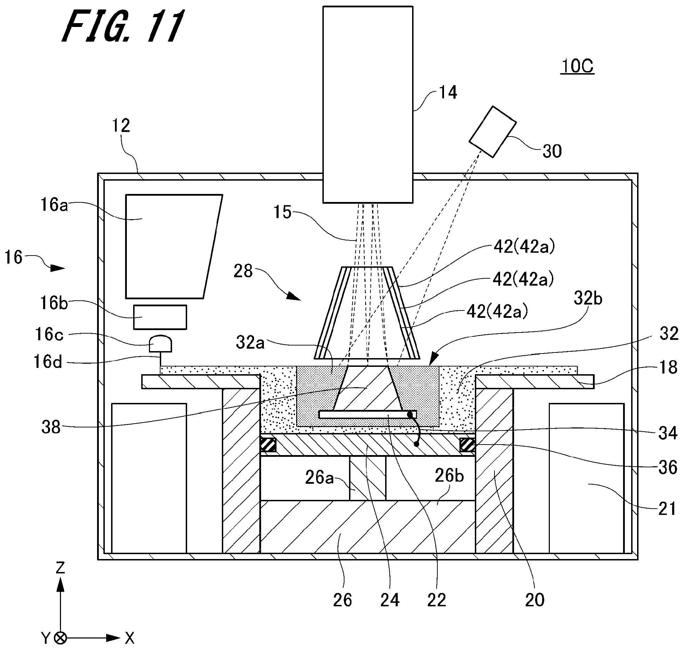

FIG. 11 is a side view schematically illustrating a configuration of a three-dimensional PBF-AM apparatus according to a fourth embodiment of the present invention.

As illustrated in FIG. 11, a three-dimensional PBF-AM apparatus 10C according to the fourth embodiment differs from the above-described second embodiment (FIG. 8) in that a heat shield member 41 is not provided in the heat shield unit 28. That is, in the fourth embodiment, the heat shield unit 28 includes a plurality of (three) conical heat shield members 42. When such a configuration is employed, similarly to the case of the second embodiment, the plurality of heat shield members 42 enable the radiant heat emitted from the build plate 22 and the like to efficiently return to the build plate 22 side.

### <Modification Examples and the Like>

The technical scope of the present invention is not limited to the above-described embodiment and also includes an example in which various modifications and improvements are added within a range in which specific effects obtained by the configurational elements of the invention and a combination thereof can be derived.

For example, in the second embodiment and the fourth embodiment described above, the heat shield unit 28 includes the three conical heat shield members 42; however, the number of heat shield members 42 may be two or four or more. In addition, the heat shield unit 28 may be configured to include a plurality of pyramidal heat shield members 41. In addition, the heat shield unit 28 may be configured to include both a plurality of pyramidal heat shield members 41 and a plurality of conical heat shield members 42.

In addition, in the third embodiment described above, the trap portion 46 is formed in the conical heat shield member 42, but the present invention is not limited thereto. The trap portion may be formed in the pyramidal heat shield member 41, or the trap portion may be formed in both the heat shield member 41 and the heat shield member 42. In addition, the configuration in which the trap portion is formed in the heat shield member 41 and/or the heat shield member 42 may be applied to the three-dimensional PBF-AM apparatus 10A according to the second embodiment. In this case, it is preferable to form the trap portion 46 in the heat shield member 42 disposed on the innermost side.

In addition, the three-dimensional PBF-AM apparatus according to the present invention is also characterized by including the build plate 22 having a circular shape in a plan view and the conical heat shield member 42. A preferable aspect of the three-dimensional PBF-AM apparatus in this case will be additionally described below. Further, in the following aspect of the three-dimensional PBF-AM apparatus described below, the number of conical heat shield members may be one or more.

### (Supplement)

A three-dimensional PBF-AM apparatus includes: a build plate that holds a powder layer made of a metal powder; a beam irradiating device that irradiates the build plate or the powder layer with an electron beam; and a heat shield member that is disposed between the build plate and the beam irradiating device and shields radiant heat emitted from a part heated by irradiation with the electron beam, in which the build plate is formed in a circular shape in a plan view, and the heat shield member is formed in a conical shape.

### Description of Reference Numerals

- 10, 10A, 10B, 10C: Three-dimensional powder bed fusion additive manufacturing apparatus
- 14: Beam irradiating device
- 15: Electron beam
- 22: Build plate
- 28: Heat shield member
- 30: Camera
- 32: Metal powder
- 32a: Powder layer
- 41: Heat shield member
- 41a, 41b: Side wall
- 41c: Upper wall
- 41d: Opening
- 42: Heat shield member
- 42a: Side wall
- 42b: Opening
- 42c: Opening
- 43: Beam passing hole (opening)
- 44: Camera imaging hole
- 46: Trap portion

## Claims

1. A three-dimensional powder bed fusion additive manufacturing apparatus comprising:
a build plate (22) that holds a powder layer (32a) made of a metal powder (32);
a beam irradiating device (14) that irradiates the build plate (22) or the powder layer (32a) with an electron beam (15); and
a heat shield unit (28) that is disposed between the build plate (22) and the beam irradiating device (14) and shields radiant heat emitted from a part heated by irradiation with the electron beam (15),
wherein the heat shield unit (28) is configured of a plurality of heat shield members (41, 42), and
wherein each of the plurality of heat shield members (41, 42) has a side wall (41a, 41b, 42a) surrounding a side of a beam passage region through which the electron beam (15) passes, and the side walls (41a, 41b, 42a) are arranged to overlap each other on a side of the beam passage region.

2. The three-dimensional powder bed fusion additive manufacturing apparatus according to claim 1,
wherein the plurality of heat shield members (41, 42) are arranged to form a space between the side walls (41a, 41b, 42a) adjacent to each other on the side of the beam passage region.

3. The three-dimensional powder bed fusion additive manufacturing apparatus according to claim 1 or 2,
wherein each of the plurality of heat shield members (41, 42) has openings (43, 41d, 42b, 42c) formed on both the beam irradiating device (14) side and the build plate (22) side, and the opening (43, 42b) on the beam irradiating device side is formed with an opening size smaller than a size of the opening (41d, 42c) on the build plate side.

4. The three-dimensional powder bed fusion additive manufacturing apparatus according to of any preceding claim,
wherein the plurality of heat shield members (41, 42) include a conical heat shield member (42).

5. The three-dimensional powder bed fusion additive manufacturing apparatus according to claim 4,
wherein the conical heat shield member (42) is disposed on an innermost side of the heat shield unit (28).

6. The three-dimensional powder bed fusion additive manufacturing apparatus according to claim 4 or 5,
wherein the build plate (22) is formed in a circular shape in a plan view, and
wherein the conical heat shield member (42) is disposed close to an upper surface of the build plate (22) or a build surface of the powder layer (32a) when the beam irradiating device (14) irradiates the build plate (22) or the powder layer (32a) with the electron beam (15).

7. The three-dimensional powder bed fusion additive manufacturing apparatus according to any preceding claim,
wherein the plurality of heat shield members (41, 42) include a pyramidal heat shield member (41) and a conical heat shield member (42).

8. The three-dimensional powder bed fusion additive manufacturing apparatus according to claim 7,
wherein the conical heat shield member (42) is disposed at one or a plurality of positions inside the pyramidal heat shield member (41).

9. The three-dimensional powder bed fusion additive manufacturing apparatus according to claim 7 or 8, further comprising:
a camera (30) for imaging a build surface of the powder layer (32a),
wherein the pyramidal heat shield member (41) has an upper wall (41c) disposed to face the build plate (22), and the upper wall (41c) has a beam passing hole (43) for allowing the electron beam (15) to pass therethrough and a camera imaging hole (44) for securing a field of view of the camera (30).

10. The three-dimensional powder bed fusion additive manufacturing apparatus according to any preceding claim,
wherein at least one heat shield member (42) of the plurality of heat shield members (41, 42) includes a trap portion (46) that traps and reflects the radiant heat.
